(19) Europäisches Patentamt / European Patent Office / Office européen des brevets

(11) **EP 4 497 733 A1**

(12) **EUROPEAN PATENT APPLICATION**

(43) Date of publication:
29.01.2025 Bulletin 2025/05

(21) Application number: 24186859.5

(22) Date of filing: 05.07.2024

(51) International Patent Classification (IPC):
*C03C 4/02* (2006.01)    *C03C 3/078* (2006.01)

(52) Cooperative Patent Classification (CPC):
C03C 4/02; C03C 3/078

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 06.07.2023 US 202318347902

(71) Applicant: Vitro Flat Glass LLC
Cheswick PA 15024 (US)

(72) Inventor: Cid Aguilar, José Guadalupe
Cheswick, 15024 (US)

(74) Representative: f & e patent
Braunsberger Feld 29
51429 Bergisch Gladbach (DE)

(54) **GRAY GLASS HAVING LOW LIGHT TRANSMISSION**

(57) A low light transmission gray glass formed from a composition includes colorants. The colorants include 1.8 wt.% to 2.3 wt.% $Fe_2O_3$, 0.28 wt.% to 1.2 wt.% FeO, 0.030 wt.% to 0.040 wt.% $Co_3O_4$, 0.0020 wt.% to 0.010 wt.% Se, 0.00050 wt.% to 0.050 wt.% CuO, and 0.01 wt.% to 1 wt.% $TiO_2$. The glass has a visible light transmission ($T_{LA}$) of less than 15%, a direct solar transmittance ($T_{DS}$) of less than 14%, an infrared radiation transmittance ($T_{IR}$) of less than 14%, a UV light transmittance (Tuv) of less than 8%, and a total solar transmittance ($T_{TS}$) of less than 38%.

EP 4 497 733 A1

Processed by Luminess, 75001 PARIS (FR)

**Description**

BACKGROUND

Field

The present application relates generally to a low transmittance glass of a neutral gray color and, more specifically, to a composition of gray glass for use in the automotive industry, such as panoramic roofs, and rear door side windows.

Technical Considerations

Colored glass is a material to which, during the melting process, metal oxides are incorporated. It is common to add iron-cobalt oxides in combination with selenium to yield glass shades from a greenish or -neutral gray to yellowish gray depending on the ratio of the additives. By controlling the concentrations of iron oxide, cobalt oxide, and selenium and controlling the oxidation-reduction conditions in the glass melting atmosphere and/or in the mixture (mainly carbon and sodium nitrate concentration), it is possible to yield a glass having low light transmission, desired blocking of direct solar transmission, and the privacy gray coloration, which may be used in automotive applications for panoramic roofs and rear doors of motor vehicles. Drawbacks to the glass compositions currently used include the high cost of using rare earth oxides needed to achieve the desired material and optical properties.

Accordingly, those skilled in the art continue research and development in the field of gray glass for use in the automotive industry.

SUMMARY

Disclosed is a low light transmission gray glass formed from a composition.

In an example, the low light transmission gray glass has a compositions that includes a colorant. The colorant includes 1.8 wt.% to 2.3 wt.% $Fe_2O_3$; 0.28 wt.% to 1.2 wt.% FeO; 0.030 wt.% to 0.040 wt.% $Co_3O_4$; 0.0020 wt.% to 0.010 wt.% Se; 0.00050 wt.% to 0.050 wt.% CuO; 0.01 wt.% to 1 wt.% $TiO_2$; and a redox of 15 to 40% (based on total weight of the glass). The glass has a visible light transmission ($T_{LA}$) of less than or equal to 15%, a direct solar transmittance ($T_{DS}$) of less than or equal to 14%, an infrared radiation transmittance ($T_{IR}$) of less than or equal to 14%, a UV light transmittance ($T_{UV}$) of less than or equal to 8%, and a total solar transmittance ($T_{TS}$) of less than or equal to 38%.

In an example, the low light transmission gray glass formed from a composition that includes 68 wt.% to 75 wt.% $SiO_2$; 0 wt.% to 5 wt.% $Al_2O_3$; 5 wt.% to 15 wt.% CaO; 0 wt.% to 10 wt.% MgO; 10 wt.% to 18 wt.% $Na_2O$; 0 wt.% to 5 wt.% $K_2O$; and 0.05 wt.% to 0.3 wt.% $SO_3$; and colorants comprising: 1.8 wt.% to 2.3 wt.% $Fe_2O_3$; 0.28 wt.% to 1.2 wt.% FeO; 0.030 wt.% to 0.040 wt.% $Co_3O_4$; 0.0020 wt.% to 0.010 wt.% Se; 0.00050 wt.% to 0.050 wt.% CuO; 0.01 wt.% to 1 wt.% $TiO_2$; and a redox of 15 to 40%. In another example, glass has a visible light transmission ($T_{LA}$) of less than or equal to 15%, a direct solar transmittance ($T_{DS}$) of less than or equal to 14%, an infrared radiation transmittance ($T_{IR}$) of less than or equal to 14%, a UV light transmittance ($T_{UV}$) of less than or equal to 8%, and a total solar transmittance ($T_{TS}$) of less than or equal to 38%.

Also disclosed is a method for making a low light transmission gray glass using a conventional float non-vacuum glass system.

In an example, the method includes melting a glass batch to provide a pool of molten glass; flowing the pool of molten glass onto the molten tin bath; moving the molten glass on the surface of the molten tin bath, while controllably cooling the molten glass and applying forces to the molten glass to provide a glass of a desired thickness; and removing the glass from the molten tin bath; wherein the glass comprises: 68 wt.% to 75 wt.% $SiO_2$; 0 wt.% to 5 wt.% $Al_2O_3$; 5 wt.% to 15 wt.% CaO; 0 wt.% to 10 wt.% MgO; 10 wt.% to 18 wt.% $Na_2O$; 0 wt.% to 5 wt.% $K_2O$; and 0.05 wt.% to 0.3 wt.% $SO_3$; and colorants comprising: 1.8 wt.% to 2.3 wt.% $Fe_2O_3$; 0.28 wt.% to 1.2 wt.% FeO; 0.030 wt.% to 0.040 wt.% $Co_3O_4$; 0.0020 wt.% to 0.010 wt.% Se; 0.00050 wt.% to 0.050 wt.% CuO; 0.01 wt.% to 1 wt.% $TiO_2$; and a redox of 15 to 40%. In an example, the glass has a visible light transmission ($T_{LA}$) of less than 15%, a direct solar transmittance ($T_{DS}$) of less than or equal to 14%, an infrared radiation transmittance ($T_{IR}$) of less than or equal to 14%, a UV light transmittance ($T_{UV}$) of less than or equal to 8%, and a total solar transmittance ($T_{TS}$) of less than or equal to 38%.

Other examples will become apparent from the following detailed description, the accompanying drawings, and the appended claims.

DETAILED DESCRIPTION

As used herein, all numbers expressing dimensions, physical characteristics, processing parameters, quantities of ingredients, reaction conditions, and the like, used in the specification and claims are to be understood as being modified in all instances by the term "approximately" or "about". Accordingly, unless indicated to the contrary, the numerical values set forth in the following specification and claims may vary depending upon the desired properties sought to be obtained by the present disclosure. At the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 1 to 3.3, 4.7 to 7.5, 5.5 to 10, and the like. "A" or "an" refers to one or more.

As used herein, the phrase "at least one of", when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations.

The present disclosure relates to compositions and methods for making colored glasses. Colored glass is a material to which, during the melting process, metal oxides are incorporated. As a result of previous studies, it is known that the addition of iron-cobalt oxides in combination with selenium, gives the glass shades from a greenish or neutral gray to yellowish gray depending on the ratio of these. By controlling the concentrations of iron oxide, cobalt oxide, and selenium and controlling the oxidation-reduction conditions in the glass melting atmosphere and/or in the mixture (mainly carbon and sodium nitrate concentration), it is possible to yield a glass having low light transmission, desired blocking of direct solar transmission, and the privacy gray coloration, which may be used in automotive applications for panoramic roofs and rear doors of motor vehicles.

The glasses described in the following examples refer to a type of neutral gray glass that are based on three main colorants: iron oxide, cobalt oxide, and selenium, whose main function is to provide solar control properties to the glass.

The following patents and publications provide examples that utilize various metal oxides as the main colorants to obtain a gray glass and provide the final characteristics of the product. These components, such as nickel oxide, manganese oxide, chromium oxide or rare earth oxides, are mixed in a base formulation of a silico-soda-calcium glass.

For example, the U.S. Patent No. 5,352,640 (U.S. Patent No. RE37,998 E) to Combes et al., discloses obtaining gray glasses used mainly in the automotive industry, whose composition of coloring agents ranges from 1.4 to 4% total iron and 0 to 0.05% cobalt oxide, with a surplus of iron oxide, cobalt around 0.02% when $Fe_2O_3$ is less than 2%, optionally you can have a combination of $CoO+Se+Cr_2O_3$ with a content less than 0.24% in weight. The physical properties of glass such as light transmission and energy transmission are equal to or less than 20% under illuminant A and equal to or less than 12% in a thickness of 3.85 mm, respectively.

In U.S. Patent No. 5,545,596 by Alvarez Casariego, et al., the use of dyes is disclosed in concentrations of 0.45 to 2.5% for total iron, from 0.001 to 0.02% for CoO, from 0 to 0.0025% for Se and from 0 to 0.1% for $Cr_2O_3$, for gray glass with light transmission with illuminant A from 20 to 60%, used in side and rear windows for vehicles.

U.S. Patent No. 7,393,802 B2 by Seto, et al., discloses the use of $Fe_2O_3$, CoO, Se and NiO as colorants, but also adds the use of $CeO_2$ and $TiO_2$ in amounts not greater than 2.0% by weight to increase the absorption of ultraviolet.

For the glasses obtained in U.S. Patent No. 7,622,410 assigned to Longobardo et al., nickel oxide is used in concentrations of 500 to 1000 ppm, erbium oxide ($Er_2O_3$) of 0.1 to 0.8% and chromium oxide in contents of 1 to 20 ppm, in addition to a total content of iron oxide of 0.15 to 0.45%, selenium less than or equal to 3 ppm and cobalt oxide of 120 to 240 ppm. The mixture of these oxides is used for the general adjustment of the gray coloration of the glass. The light transmission of the glass of this patent is 8 to 25%, with a dominant wavelength of 435 to 570 nm, using a cobalt oxide/nickel oxide ratio of 0.22 to 0.30 and redox values of FeO/ $Fe_2O_3$ from 0.20 to 0.40. A significant drawback to these disclosed glasses is the high cost of using rare earth oxides needed in their compositions.

In U.S. Patent No. 8,017,538 B2 of Teyssedre, et al., the glasses presented are known to use nickel oxide in concentrations of 400 to 700 ppm or 1500 to 1900 ppm, iron oxide 0.7 to 0.95% with a redox value of 0.40 or less, in addition to 200 to 300 ppm cobalt oxide, to obtain a gray color adjustment and obtain the following physical properties: light transmission under illuminant A (TLA) of 50% or less and an average in the energy transmission (TE) less than 45%, for a glass thickness of 3.85mm. The use of nickel oxide, used as a colorant in some of the previous patents, has the disadvantage that nickel sulfide inclusions can form (a defect that is not easily detectable) that can cause the glass sheets to break due to the difference in the coefficient of thermal expansion of this material with the rest of the glassy matrix. The glasses described in U.S. Patent No. 8,551,899 by Kim, et al., have a dark neutral gray-green coloration, due to the dyes used, such as $Fe_2O_3$ at 1.4 to 2.5%, CoO at 0.02 to 0.04%., Se from 0.0001 to 0.004%, MnO from 0.005 to 0.5 and CeO from 0.05 to 1% with illuminant light transmission A of less than 15%. These glasses are used as privacy glasses or panoramic roofs in cars, as well as used in construction.

U.S. Patent No. 7,754,632 Delmotte, et al., uses concentrations of MnO up to 600 ppm and $TiO_2$ less than 0.1% in addition to other oxides such as $Fe_2O_3$ 1.1 to 1.5% (total iron), Co 150 to 200 ppm, $Cr_2O_3$ 25 at 100 ppm and Se 10 at 50 ppm, to achieve optical characteristics of illuminant A light transmission of less than 20% for thicknesses of 4 mm.

U.S. Patent No. 8,785,338 to Tsuzuki, et al., refers to a composition of a silico-sodic-lime glass with contents of 0.70 to 1.70% by mass of $Fe_2O_3$ (total iron), 0.15 to 0.45% by mass of FeO (oxide ferrous), 0-0.8 mass% $TiO_2$, 100 to 350 ppm CoO, 0 to 60 ppm Se, 100 to 700 ppm $Cr_2O_3$, and 3 to 150 ppm MnO, having a ratio ($Fe^{2+}$/Faith$^{3+}$) from ferrous ion to ferric ion from 0.20 to 0.80. This patent discloses that this glass has superior ultraviolet radiation absorption performance and infrared radiation absorption performance (thermal insulation performance), in addition to adequate transparency, achieved thanks to the use of $TiO_2$ preferably in ranges from 0 to 0.5%.

U.S. Patent No. 9,120,695 Lee, et al., discloses the following glass composition: 1.4 to 2% $Fe_2O_3$ with an FeO content of 10 to 30% (with respect to total iron), 0.02 to 0.035% CoO, 0.0015 to 0.004% Se and 0.005 to 0.5% MnO. Optical characteristics of illuminant A light transmission of less than 15% and ultraviolet ray transmission of 2% or less are reported.

The dark green glasses disclosed in U.S. Patent No. 9,617,182 of Cho, et al. (April 11, 2017), discloses 1.2 to 2% of total $Fe_2O_3$ as dye, 0.0220 to 0.04% CoO, 0.002 to 0.0035% Se and 0.01 to 0.04% $Cr_2O_3$, in which the weight ratio of (CoO + $Cr_2O_3$) to Se (= [CoO + $Cr_2O_3$]/Se) is 13 to 25 and the weight ratio of CoO to $Cr_2O_3$ (= CoO/ $Cr_2O_3$) is 0.9 to 1.8. The glass exhibits a transmittance of visible light ($T_{LA}$) of 15% or less, a transmittance of direct solar energy ($T_{DS}$) of 16% or less, and a transmittance of ultraviolet radiation ($T_{UV}$) of 3% or less, measured for a thickness 4mm reference.

U.S. Patent No. 7,902,097 B2 by Cid-Aguilar et al., uses concentrations of: 0 to 30 ppm of $Co_3O_4$, 1 to 20 ppm of Se, 20 to 200 ppm of CuO and 0.30 to 0.70% of $Fe_2O_3$ to obtain a glass neutral gray, with optical characteristics of light transmission with illuminant A greater than 65%, transmission of total solar energy equal to or less than 60%, transmission of ultraviolet radiation less than 46% and a dominant wavelength of 490 to 600 nm. This patent discloses adding components such as carbon from 0.01 to 0.07% or sodium nitrate from 0.2 to 1.2% to modify the oxidation-reduction state of iron and copper oxide, because, in combination with the other dyes, it may be used as an alternative for obtaining the gray hue, partially substituting the addition of titanium oxide and cobalt oxide.

In accordance with the above-mentioned disclosures, iron is present in glass (silico-sodic-calcic) in two compounds that depend on the oxidation state of the iron: if iron is present as $Fe^{2+}$, the compound formed is ferrous oxide (FeO). If iron is present as $Fe^{3+}$, the compound formed is ferric oxide ($Fe_2O_3$). Each ion confers different properties; the ferrous ion has a broad and strong absorption band centered at 1050 nm, which results in a decrease in infrared radiation. Furthermore, this band extends into the visible region, decreasing light transmission and imparting a bluish tint to the glass. On the other hand, the ferric ion presents a strong absorption band located in the ultraviolet region, which prevents its transmission through the glass and, in addition, it presents two other weak bands in the visible region located between 420 and 440 nm, which may cause a slight decrease in light transmission and a yellowing in the glass. Generally, the iron in the glass and its amount of ferrous oxide are expressed in the form of $Fe_2O_3$. It is common to express the amount of ferrous or ferric oxide as the percentage of total iron. The balance between ferrous and ferric oxide has a direct effect on the color and transmittance characteristics of the glass may be represented as:

$$\% \text{ Redox} = \frac{FeO \times 100}{\text{Total } Fe_2O_3}$$

The greater the amount of ferric ion ($Fe^{3+}$) present in the glass, the greater the absorption of ultraviolet radiation and the transmission of light will increase, as well as the yellowish hue. When the content of the ferrous ion ($Fe^{2+}$) increases as a result of the chemical reduction of $Fe_2O_3$, the absorption of infrared radiation will increase, but the absorption of ultraviolet radiation will decrease, and so will the transmission of light.

$$Fe^{3+} \text{ (Yellow)} \leftrightarrows Fe^{2+} \text{ (Blue) [Yellow +Blue = Green]}$$

$$2Fe_2O_3 \rightleftarrows 4FeO + O_2$$

The variation of the FeO concentration in relation to $Fe_2O_3$, gives rise to a color change in the glass. The hue shift can be changed from yellow through green, blue to amber. The color changes as follows (according to experimental results): Yellow- Low ferrous (12%) - High light transmission (High ferric ion) Yellow-Green (16%). Green-Yellow (20%) Green (25% typical value green glass); Teal Green (29%); Greenish Blue (35%); Blue (50%); Olive Green (60%) Champagne (65%); and Amber - High ferrous (75%) - Low light transmission (low ferric ion).

To control the balance between ferrous oxide and ferric oxide necessary to achieve a solar control glass, it is beneficial to establish the conditions in mixture and melting atmosphere. In one aspect, the concentration of reducing agents such as carbon and oxidizing agents such as sodium sulfate and sodium nitrate may be selectively adjusted. As far as melting conditions are concerned, it may be beneficial to adjust the atmosphere with more or less oxygen content depending on the thermal performance and the desired shade of glass.

Additionally, it is well known that titanium oxide also acts as a colorant, and when used in combination with $Fe_2O_3$, it is possible to obtain a further reduction of UV light transmittance up to a point where the desired visibility transmission is achieved.

K. M. Fyles in the article Modern Automotive Glasses, Glass Technology, vol 37, February, 1996, pp. 2-6, discloses that iron is the most important colorant in automotive glass since it is a component available at a low price that absorbs undesirable ultraviolet radiation (ferric ion) and, in addition, a large amount of infrared radiation (ferrous ion).

Gordon F. Bresterm et al., in the article "The color of iron-containing glasses of varying composition", Journal of the Society of Glass Technology, New York, USA, April, 1950, pp. 332-406, discloses color changes caused by systematically varying the composition of iron-containing silicate and non-silica glasses evaluated in terms of visual color, spectral transmission, and chromaticity.

Other articles that disclose the importance of the balance between ferrous and ferric oxides in glasses include one written by N. E. Densem; The equilibrium between ferrous and ferric oxides in glasses; Journal of the Society of Glass Technology, Glasgow, England, May 1937, pp. 374-389; J.C. Hostetter and H.S. Roberts, "Note on the dissociation of Ferric Oxide dissolved in glass and its relation to the color of iron-bearing glasses"; Journal of the American Ceramic Society, USA, September, 1921, pp. 927-938. Many scientific books and articles have been published on the composition of colored glass with ultraviolet and infrared radiation absorption characteristics.

C.R. Bamford, in the book Color Generation and Control in Glass, Glass Science and Technology (Elsevier Science Publishing Co., Amsterdam, 1977) describes the principle of glass coloring methods and applications. In this book, the author considers that three elements govern the color of the light transmitted by a glass, being the color of the incident light, the interaction of the glass with that light, and the interaction of the transmitted light with the observer's eye. The procedures require the spectral transmission data of the glass with the corresponding glass thickness and viewing angle.

Regarding titanium oxide (TiO) in silico-sodic-calcic glasses, the most stable form of titanium in glasses is tetravalent ($Ti^{4+}$). The trivalent form could confer coloration, however, this effect is not observed in silico-sodic-calcic glass. In the paper "Effects of Titanium Dioxide on Glass" by Beals MD, The Glass Industry, September, 1963, pp. 495-531, he describes the interest that titanium dioxide has been shown as a component of glass. Effects produced by the use of titanium dioxide include comments that $TiO_2$ greatly increases the refractive index, increases the absorption of light in the ultraviolet region, and that the viscosity and surface tension are reduced. From data on the use of titanium dioxide in enamels, it was observed that $TiO_2$ increases chemical durability and acts as a flux. In general, clear glasses containing titanium dioxide can be found in all common glass-forming systems (borates, silicates, and phosphates). The various glass-forming regions for titanium dioxide-containing systems are not lumped together, as the organization of the discussion is based more on the properties of a use of titanium dioxide-containing glasses rather than their own constitution. On the other hand, the addition of selenium to silica-sodium-lime glass can produce a pink coloration due to the presence of atomic selenium. Selenium is one of the most widely used physical bleaches for glass with traces of iron coming as an undesirable impurity in the raw materials, because its coloration neutralizes the ferrous and ferric ions present in the glass. The combination of iron oxide and selenium in the silico-soda-lime glass confers a reddish-brown coloration and a decrease in light transmission, due to an absorption band located in the visible region between 490 and 500nm (band similar to selenium atomic). This band extends into the ultraviolet region, also causing a decrease in this type of transmission in the glass. The intensity of the coloration and the final properties of the glass are a function of the concentration of iron oxide and selenium in the glass.

It is well known that copper has played an important role in the production of glass, ceramics, and colored pigments. For example, the coloration of Persian ceramics has been recognized for its tonality conferred by the copper. Of special interest to ceramic artists are turquoise blue and especially Egyptian and Persian dark blue (Waldemar A.Weil; Colored Glasses, Society of Glass Technology, Great Britain, pp.154-167, 1976).

Copper has been used in glass compositions, not only in those of the silico-sodic-calcic type, but in some others, such as those that contain borosilicate, for example. Therefore, the color developed depends on the base of the glass, its concentration and its oxidation state.

In the case of a sodium-silico-calcium base glass, copper in oxide form imparts a blue coloration of a greenish tone, specifically turquoise, however, in glass, copper can be in its monovalent state, which is not imparts color. Thus, the blue-green coloration depends not only on the amount of copper present, but also on the ionic balance between the cuprous and cupric states. The maximum absorption of copper oxide is in a band centered at 780 nm and a secondary weak maximum peak is present at 450 nm, which disappears at high soda contents (around 40 wt%) (C. R. Bamford Color Generation and Control in Glass, Glass Science and Technology, Elsevier Scientific Publishing Company, pp.48-50, Amsterdam, 1977).

The incorporation of copper oxide (CuO), in combination with iron oxide, cobalt oxide, selenium and titanium oxide is an alternative to obtain a gray tonality with low light transmission for use in the automotive industry or construction, where glass with low illuminating light transmission A ($T_{LA}$) not greater than 15%, direct solar transmittance ($T_{DS}$) not greater than 14%, transmission of near infrared radiation ($T_{IR}$) not greater than 14%, a transmission of ultraviolet radiation ($T_{UV}$) not greater than 8%, a transmission of total solar energy ($T_{TS}$) not greater than 38%, a purity not greater than 50% and a dominant wavelength of 480-590 nm when having a nominal thickness of 3.85 mm. It has been verified that in industrial production it is feasible to add CuO in concentrations less than 120 ppm for a thickness of 4 mm and less than 100 ppm for thicknesses of 6 mm.

Solar control is the ability to modify the amount of solar radiation transmitted or reflected, in the spectral intervals of the near ultraviolet (UV; 300-380 nm), visible (VIS; 380-780 nm) and infrared (IR; 780-2500 nm) ranges. This may be achieved with the addition of various absorbent coloring agents in the initial mix, so that the glass has properties to absorb both infrared (IR) and ultraviolet (UV) solar radiation, to reduce the passage of excessive heat into the interior of the vehicle caused by radiation from the sun, as well as to protect interiors from the degradation of UV radiation from it.

Glass can also be manufactured in varying thicknesses, such as the glass used in the manufacture of laminated systems. If higher concentrations of CuO are present, during the formation process inside the float chamber, a reduction process attributable to the atmosphere of the process could occur, presenting a reddish coloration on the glass surface, which is observed by reflection. This effect is related to the residence time and the advance speed of the glass batten, which means that, at lower speeds, it will be necessary to reduce the CuO content in glass or adjust the reducing conditions in the float chamber.

The present disclosure relates to a gray glass. In one aspect, the disclosure includes a low illuminating light transmission A ($T_{LA}$) of not greater than 15%, a direct solar transmittance ($T_{DS}$) of not greater than 14%, a transmission of near infrared radiation ($T_{IR}$) of not more than 14%, a transmission of ultraviolet radiation ($T_{UV}$) of not more than 8%, a transmission of total solar energy ($T_{TS}$) of not more than 38%, a purity not more than 50% and a dominant wavelength of 480-590 nm when it has a nominal thickness of 3.85 mm, manufactured by the float process.

In another aspect, the disclosure relates to the use of copper oxide as a partial replacement for cobalt oxide ($Co_3O_4$). The feasibility of its addition to flat glass manufactured by the float process has been demonstrated up to levels close to 120 ppm without reduction effect due to the conditions of the tin chamber. Likewise, $TiO_2$ may be included as an additional element with iron oxide to provide further reduction in the transmission of ultraviolet radiation. In another aspect, the disclosure relates to methods for obtaining a gray glass composition with low light transmission, which includes additional elements such as carbon or sodium nitrate to modify the oxidation-reduction state of iron oxide.

The glass of this disclosure avoids the use of coloring compounds such as nickel, chromium, manganese or rare earth oxides, mainly erbium oxide ($Er_2O_3$), which are costly.

The present disclosure further relates to a gray glass composition that, may be implemented in both automotive and non-automotive applications, such as in the construction industry or other applications such as, it can be used as a substrate to be coated by single or thin multi-layers applied via vacuum cathodic erosion process (MSVD), chemical vapor deposition (CVD) or other techniques.

A typical composition of a silico-soda-calcium glass formed by the float glass process for the automotive industry, is characterized by the following formulation based on the percentage by weight with respect to the total weight of the glass: 68 wt.% to 75 wt.% $SiO_2$; 0 wt.% to 5 wt.% $Al_2O_3$; 5 wt.% to 15 wt.% CaO; 0 wt.% to 10 wt.% MgO; 10 wt.% to 18 wt.% $Na_2O$; 0 wt.% to 5 wt.% $K_2O$; and 0.05 wt.% to 0.3 wt.% $SO_3$.

The glass composition of the present disclosure is based on a silica-soda-calcium glass to which one or more of the following colorants described below were added to obtain a gray color. In one example, the composition includes 1.8 wt.% to 2.3 wt.% $Fe_2O_3$, preferably about 2.0 wt.% to about 2.2 wt.% $Fe_2O_3$, or more preferably 2.04 to 2.12 wt.% $Fe_2O_3$; 0.28 wt.% to 1.2 wt.% FeO; a redox of 15% to 40%, preferably 17% to 30%, more preferably 19% to 25%; 0.030 wt.% to 0.040 wt.% $Co_3O_4$; 0.0020 wt.% to 0.010 wt.% Se; 0.00050 wt.% to 0.050 wt.% CuO; and 0.01 wt.% to 1 wt.% $TiO_2$. Additional agents that may be added to the composition to adjust oxidation-reduction include 0.01 wt.% to 1.0 wt.% $NaNO_3$ and 0 wt.% to 0.07 wt.% carbon.

One advantage to adding sodium nitrate ($NaNO_3$) and carbon to the composition is to modify the oxidation state of the iron to reach the optimal level of direct solar transmittance ($T_{DS}$). In addition, Sodium Nitrate helps to optimize selenium retention in the glass. This gray glass has a visible light transmission ($T_{LA}$) not greater than 15%, a direct solar transmittance ($T_{DS}$) not more than 14%, an infrared radiation transmittance ($T_{IR}$) not more than 14%, a UV light transmittance ($T_{UV}$) not more than 8%, a transmission of energy total solar ($T_{TS}$) not greater than 38%, a purity not greater than 50% and a dominant wavelength of 480-590 nm when it has a thickness, for example, between 1.4 to 6 mm, 1.6 to 5 mm, and more preferably 3.85mm. The glass of this disclosure avoids the use of coloring compounds such as nickel, chromium, manganese, or rare earth oxides, mainly erbium oxide ($Er_2O_3$).

This disclosure is further described in the following numbered clauses:

Clause 1. A low light transmission gray glass formed from a composition comprising colorants: 1.8 wt.% to 2.3 wt.% $Fe_2O_3$; 0.28 wt.% to 1.2 wt.% FeO; 0.030 wt.% to 0.040 wt.% $Co_3O_4$; 0.0020 wt.% to 0.010 wt.% Se; 0.00050 wt.% to 0.050 wt.% CuO; and 0.01 wt.% to 1 wt.% $TiO_2$, wherein the glass has a visible light transmission ($T_{LA}$) of less than 15%, a direct solar transmittance ($T_{DS}$) of less than 14%, an infrared radiation transmittance ($T_{IR}$) of less than 14%, a UV light transmittance ($T_{UV}$) of less than 8%, and a total solar transmittance ($T_{TS}$) of less than 38%.

Clause 2. The glass of clause 1, further comprising a redox ratio of 15 to 40 %.

Clause 3. The glass of clause 1 or 2 having an excitation purity of no more than 50% at a thickness of 3.85 mm in a wavelength of 480 to 590 nm.

Clause 4. The any of the clauses 1-3, wherein the glass composition further: 68 wt.% to 75 wt.% $SiO_2$; up to 5 wt.% $Al_2O_3$; 5 wt.% to 15 wt.% CaO; up to 10 wt.% MgO; 10 wt.% to 18 wt.% $Na_2O$; up to 5 wt.% $K_2O$; and 0.05 wt.% to 0.3 wt.% $SO_3$.

Clause 5. The glass of any of the clauses 1-4, wherein the colorants further comprises 0.01 wt.% to 1.0 wt.% $NaNO_3$.

Clause 6. The glass of any of the clauses 1-5, wherein the glass further comprises up to 0.07 wt.% carbon.

Clause 7. A glass sheet comprising the glass of any of clauses 1-6.

Clause 8. The glass sheet of clause 7 comprising the following color CIELAB values as measured using an integrating sphere with $D_{65}$ Illumination, 10° observer with specular component included: a L* value ranging from 46 to 15; an a* value ranging from -10 to 5; and a b* value ranging from -5.0 to 15.

Clause 9. The glass sheet of clause 7 or 8 having an excitation purity of no more than 50% at a thickness of 3.85 mm.

Clause 10. The glass sheet of any of the clauses 7-9, wherein the dominant wavelength is from 480 nm to 590 nm.

Clause 11. The glass sheet of any of the clauses 7-10, which is formed by a float process.

Clause 12. A method for making a low light transmission gray glass using a conventional float non-vacuum glass system, the method comprising: melting a glass batch to provide a pool of molten glass; flowing the pool of molten glass onto the molten tin bath; moving the molten glass on the surface of the molten tin bath, while controllably cooling the molten glass and applying forces to the molten glass to provide a glass of a desired thickness; and removing the glass from the molten tin bath; wherein the glass comprises: 1.8 wt.% to 2.3 wt.% $Fe_2O_3$; 0.28 wt.% to 1.2 wt.% FeO; 0.030 wt.% to 0.040 wt.% $Co_3O_4$; 0.0020 wt.% to 0.010 wt.% Se; 0.00050 wt.% to 0.050 wt.% CuO; and 0.01 wt.% to 1 wt.% $TiO_2$, wherein the glass has a visible light transmission ($T_{LA}$) of less than 15%, a direct solar transmittance ($T_{DS}$) of less than 14%, an infrared radiation transmittance ($T_{IR}$) of less than 14%, a UV light transmittance ($T_{UV}$) of less than 8%, and a total solar transmittance ($T_{TS}$) of less than 38%.

Clause 13. The method of clause 12, wherein the glass comprises a redox ratio of 15 to 40%.

Clause 14. The method of clause 12 or 13, wherein the glass has an excitation purity of no more than 50% at a thickness of 3.85 mm in a wavelength of 480-590 nm.

Clause 15. The method of any of the clauses 12-14, wherein the glass further comprises: 68 wt.% to 75 wt.% $SiO_2$; 0 wt.% to 5 wt.% $Al_2O_3$; 5 wt.% to 15 wt.% CaO; 0 wt.% to 10 wt.% MgO; 10 wt.% to 18 wt.% $Na_2O$; 0 wt.% to 5 wt.% $K_2O$; and 0.05 wt.% to 0.3 wt.% $SO_3$.

Clause 16. The method of any of the clauses 12-15, wherein the glass further comprises 0.01 wt.% to 1.0 wt.% $NaNO_3$.

Clause 17. The method of any of the clauses 12-16, wherein the dominant wavelength of the glass is from 480 nm to 590 nm.

Clause 18. A glass comprising colorants, the colorants comprising 1.8 wt.% to 2.3 wt.% $Fe_2O_3$; 0.28 wt.% to 1.2 wt.% FeO; 0.030 wt.% to 0.040 wt.% $Co_3O_4$; 0.0020 wt.% to 0.010 wt.% Se; 0.00050 wt.% to 0.050 wt.% CuO; 0.01 wt.% to 1 wt.% $TiO_2$; and a redox of 15 to 40% (based on total weight of the glass).

Clause 19. The glass of clause 18 further comprising a visible light transmission ($T_{LA}$) of less than or equal to 15%

Clause 20. The glass of clause 18 or 19 further comprising a direct solar transmittance ($T_{DS}$) of less than or equal to 14%

Clause 21. The glass of any of the clauses 18-20 further comprising an infrared radiation transmittance ($T_{IR}$) of less than or equal to 14%.

Clause 22. The glass of any of the clauses 18-21 further comprising a UV light transmittance ($T_{UV}$) of less than or equal to 8%, and a total solar transmittance ($T_{TS}$) of less than or equal to 38%.

Clause 23. The glass of any of the clauses 18-22 further comprising 68 wt.% to 75 wt.% $SiO_2$; 0 wt.% to 5 wt.% $Al_2O_3$; 5 wt.% to 15 wt.% CaO; 0 wt.% to 10 wt.% MgO; 10 wt.% to 18 wt.% $Na_2O$; 0 wt.% to 5 wt.% $K_2O$; and 0.05 wt.% to 0.3 wt.% $SO_3$.

Clause 24. The glass of any of the clauses 18-23 wherein the amount of $Fe_2O_3$ is 2.0 wt.% to 2.2 wt.%.

Clause 25. The glass of any of the clauses 18-23 wherein the amount of $Fe_2O_3$ is 2.04 wt.% to 2.12 wt.%.

EXAMPLES

The following examples show the physical properties, of Illuminant A Light Transmission ($T_{LA}$), Direct Solar Power Transmission ($T_{DS}$), Near Infrared Radiation Transmission ($T_{IR}$), UV light transmittance ($T_{UV}$), Total Solar Power Transmission ($T_{TS}$). The color transmission (L*, a*, and b*), color purity and a dominant wavelength (l), for a glass of 3.85.

TABLE 1 AND TABLE 2

Tables 1 and 2 (examples 1 to 14) show the experimental results of the composition of the present disclosure with the combination of iron oxide ($Fe_2O_3$), cobalt oxide ($Co_3O_4$), selenium (Se), oxide copper and titanium oxide (TiO). Additionally, they contain 0.66% sodium nitrate ($NaNO_3$) as an oxidizing agent in the mix, without the addition of carbon.

TABLE 1

| Examples | 1 | 2 | 3 | 4 | 5 | 6 | 7 |
|---|---|---|---|---|---|---|---|
| | Colorants in wt. % | | | | | | |
| $Fe_2O_3$ | 1.85 | 1.85 | 1.85 | 1.85 | 2.30 | 2.30 | 2.30 |
| $Co_3O_4$ | 0.0295 | 0.0295 | 0.0295 | 0.0330 | 0.0330 | 0.0330 | 0.0330 |
| CuO | 0.0075 | 0.0075 | 0.0075 | 0.0075 | 0.0075 | 0.0075 | 0.0075 |
| Se | 0.0026 | 0.0033 | 0.0023 | 0.0027 | 0.0045 | 0.0035 | 0.0042 |
| TiO2 | 0.056 | 0.056 | 0.056 | 0.056 | 0.056 | 0.056 | 0.056 |
| Redox Ratio | 17.9 | 15.3 | 17.8 | 17.8 | 20.6 | 15.7 | 15/4 |
| FeO | 0.332 | 0.282 | 0.330 | 0.330 | 0.475 | 0.361 | 0.355 |
| $NaNo_3$ | 0.66 | 0.66 | 0.66 | 0.66 | 0.66 | 0.66 | 0.66 |
| Carbon | 0 | 0 | 0 | 0 | 0 | 0 | 0 |
| | Physical Properties 3.85 mm (%) | | | | | | |
| UV light transmittance ($T_{UV}$) | 4.9 | 4.3 | 5.3 | 4.8 | 1.5 | 2.1 | 1.5 |
| visible light transmission ($T_{LA}$) | 16.8 | 15.1 | 18.8 | 16.1 | 8.0 | 12.2 | 10.2 |
| direct solar transmittance ($T_{DS}$) | 15.1 | 16.2 | 16.2 | 14.8 | 6.9 | 11.5 | 10.6 |
| infrared radiation transmittance ($T_{IR}$) | 12.8 | 16.6 | 13.0 | 12.8 | 6.3 | 11.1 | 11.4 |
| total solar transmittance ($T_{TS}$) | 37.0 | 37.8 | 37.8 | 36.8 | 31.0 | 34.4 | 33.7 |
| | Color Transmission D65 Obs. 10° (ASTM E308) 3.85 mm | | | | | | |
| L* | 48.8 | 45.7 | 51.7 | 48.0 | 33.7 | 41.7 | 37.9 |
| a* | -5.5 | -1.9 | -7.1 | -5.4 | -2.6 | -4.8 | -2.9 |
| b* | -2.9 | 1.9 | -4.4 | -3.0 | 6.0 | 2.7 | 6.0 |
| dominant wavelength (nm) | 483.3 | 552.2 | 482.4 | 483.1 | 578.2 | 530.2 | 576.4 |
| %Purity | 8.2 | 2.8 | 11.0 | 8.4 | 12.9 | 3.6 | 11.9 |

TABLE 2

| Examples | 8 | 9 | 10 | 11 | 12 | 13 | 14 |
|---|---|---|---|---|---|---|---|
| | | | | | | | |
| | | | | Colorants in wt. % | | | |
| $Fe_2O_3$ | 2.30 | 2.30 | 2.30 | 2.30 | 2.30 | 2.30 | 2.30 |
| $Co_3O_4$ | 0.0330 | 0.0330 | 0.0330 | 0.0365 | 0.0365 | 0.0365 | 0.0365 |
| CuO | 0.0075 | 0.0075 | 0.0075 | 0.0150 | 0.0150 | 0.0150 | 0.0150 |
| Se | 0.0042 | 0.0032 | 0.0025 | 0.0086 | 0.0083 | 0.0071 | 0.0049 |
| $TiO_2$ | 0.056 | 0.056 | 0.056 | 0.056 | 0.056 | 0.056 | 0.056 |
| Redox Ratio | 16.0 | 16.7 | 23.3 | 16.5 | 17.3 | 18.3 | 23.1 |
| FeO | 0.368 | 0.384 | 0.537 | 0.381 | 0.397 | 0.420 | 0.531 |
| $NaNO_3$ | 0.66 | 0.66 | 0.66 | 0.66 | 0.66 | 0.66 | 0.66 |

(continued)

| | Colorants in wt. % | | | | | | |
|---|---|---|---|---|---|---|---|
| % Carbon | 0.00 | 000 | 0.00 | 0.00 | 0.00 | 0.00 | 000 |
| | | | | | | | |
| | Physical Properties 3.85 mm (%) | | | | | | |
| UV light transmittance ($T_{UV}$) | 1.5 | 2.4 | 3.1 | 0.1 | 0.1 | 0.3 | 0.8 |
| visible light transmission ($T_{LA}$) | 10.1 | 12.5 | 12.1 | 3.1 | 3.2 | 4.3 | 5.9 |
| direct solar transmittance ($T_{DS}$) | 10.2 | 11.1 | 8.3 | 6.5 | 6.1 | 6.1 | 5.1 |
| infrared radiation transmittance ($T_{IR}$) | 10.7 | 9.9 | 4.7 | 9.7 | 8.8 | 7.8 | 4.5 |
| total solar transmittance ($T_{TS}$) | 33.5 | 34.1 | 32.0 | 30.7 | 30.4 | 30.5 | 29.7 |
| | | | | | | | |
| | Color Transmission D65 Obs.10° (ASTM E308) 3.85 mm | | | | | | |
| L* | 37.8 | 42.6 | 43.0 | 18.5 | 19.0 | 23.1 | 29.1 |
| a* | -2.9 | -6.2 | -9.6 | 5.8 | 5.0 | 3.4 | -3.5 |
| b* | 6.0 | 0.2 | -6.4 | 19.5 | 18.5 | 15.5 | 6.0 |
| dominant wavelength (nm) | 576.7 | 492.2 | 481.9 | 590.3 | 590.0 | 589.2 | 572.9 |
| %Purity | 12.0 | 5.1 | 17.6 | 55.7 | 52.6 | 40.6 | 14.6 |

TABLE 3

| Examples | 15 | 16 | 17 | 18 |
|---|---|---|---|---|
| | | | | |
| | Colorants in wt. % | | | |
| $Fe_2O_3$ | 1.90 | 1.90 | 1.90 | 1.90 |
| $Co_3O_4$ | 0.0310 | 0.0310 | 0.0310 | 0.0310 |
| CuO | 0.0075 | 0.0075 | 0.0075 | 0.0075 |
| Se | 0.0025 | 0.0037 | 0.0061 | 0.0079 |
| $TiO_2$ | 0.044 | 0.044 | 0.044 | 0.044 |
| Redox % | 33.1 | 33.9 | 35.9 | 38.5 |
| FeO | 0.628 | 0.644 | 0.682 | 0.731 |
| $NaNo_3$ | 0.16 | 0.16 | 0.16 | 0.16 |
| Carbon | 0.04 | 0.04 | 0.04 | 0.04 |
| | | | | |
| | Physical Properties 3.85 mm (%) | | | |
| UV light transmittance ($T_{UV}$) | 4.2 | 1.8 | 0.3 | 0.1 |
| visible light transmission ($T_{LA}$) | 10.9 | 7.3 | 3.7 | 2.2 |
| direct solar transmittance ($T_{DS}$) | 7.1 | 4.9 | 2.8 | 2.0 |
| infrared radiation transmittance ($T_{IR}$) | 3.2 | 3.0 | 2.5 | 2.1 |
| total solar transmittance ($T_{TS}$) | 31.1 | 29.5 | 28.0 | 27.4 |
| | | | | |
| | Color Transmission D65 Obs. 10° (ASTM E308) 3.85 mm | | | |
| L* | 41.3 | 33.3 | 22.1 | 15.6 |

(continued)

| Color Transmission D65 Obs. 10° (ASTM E308) 3.85 mm | | | | |
|---|---|---|---|---|
| a* | -8.8 | -7.0 | -2.5 | 0.0 |
| b* | -8.9 | -1.3 | 9.5 | 13.2 |
| dominant wavelength (nm) | 479.9 | 487.5 | 582.0 | 586.6 |
| %Purity | 21.4 | 9.3 | 26.3 | 42.4 |

Table 3 (examples 15 to 18) show the experimental results of the composition of the present disclosure with the combination of iron oxide ($Fe_2O_3$), cobalt oxide ($Co_3O_4$), selenium (Se), copper oxide and titanium oxide (TiO ). In addition, 0.16% sodium nitrate (NaNOs) and 0.04% carbon (coke type) are incorporated into the mix.

TABLE 4

| Examples | 19 | 20 | 21 | 22 | 23 | 24 |
|---|---|---|---|---|---|---|
| | | | | | | |
| Colorants in wt. % | | | | | | |
| $Fe_2O_3$ | 1.90 | 1.90 | 1.90 | 1.90 | 1.90 | 1.90 |
| $Co_3O_4$ | 0.0290 | 0.0290 | 0.0290 | 0.0290 | 0.0290 | 0.0290 |
| CuO | 0.0050 | 0.0050 | 0.0050 | 0.0050 | 0.0050 | 0.0050 |
| Se | 0.0060 | 0.0046 | 0.0037 | 0.0047 | 0.0067 | 0.0037 |
| TiO2 | 0.044 | 0.044 | 0.044 | 0.044 | 0.044 | 0.044 |
| Redox Ratio | 23.6 | 24.6 | 25.4 | 26.0 | 21.8 | 24.6 |
| FeO | 0.448 | 0.467 | 0.482 | 0.495 | 0.414 | 0.468 |
| $NaNo_3$ | 0.16 | 0.16 | 0.16 | 0.16 | 0.16 | 0.16 |
| Carbon | 002 | 002 | 0.02 | 0.02 | 002 | 002 |
| | | | | | | |
| Physical Properties 3.85 mm (%) | | | | | | |
| UV light transmittance ($T_{UV}$) | 0.9 | 1.5 | 2.3 | 1.3 | 0.7 | 2.4 |
| visible light transmission ($T_{LA}$) | 6.3 | 8.3 | 10.1 | 8.4 | 6.2 | 10.1 |
| direct solar transmittance ($T_{DS}$) | 6.6 | 7.2 | 7.9 | 6.7 | 7.2 | 8.1 |
| infrared radiation transmittance ($T_{IR}$) | 7.1 | 6.5 | 6.1 | 5.8 | 8.7 | 6.4 |
| total solar transmittance ($T_{TS}$) | 30.8 | 31.3 | 31.8 | 30.9 | 31.3 | 31.9 |
| | | | | | | |
| Color Transmission D65 Obs. 10° (ASTM E308) 3.85 mm | | | | | | |
| L* | 28.9 | 34.1 | 38.2 | 34.4 | 28.2 | 38.2 |
| a* | 2.6 | -1.6 | -4.2 | -2.1 | 4.5 | -4.3 |
| b* | 13.4 | 7.4 | 2.6 | 8.4 | 17.5 | 2.0 |
| dominant wavelength (nm) | 588.8 | 583.1 | 535.2 | 582.5 | 589.6 | 523.8 |
| %Purity | 31.0 | 15.5 | 3.8 | 17.5 | 40.6 | 3.1 |

TABLE 5

| Examples | 25 | 26 | 27 | 28 | 29 | 30 | 31 |
|---|---|---|---|---|---|---|---|
| | | | | | | | |

(continued)

| | Colorants in wt. % | | | | | | |
|---|---|---|---|---|---|---|---|
| $Fe_2O_3$ | 1.85 | 1.85 | 1.85 | 1.85 | 2.00 | 2.00 | 2.00 |
| $Co_3O_4$ | 0.0305 | 0.0305 | 0.0305 | 0.0305 | 0.0320 | 0.0320 | 0.0320 |
| CuO | 0.0050 | 0.0050 | 0.0050 | 0.0050 | 0.0030 | 0.0030 | 0.0030 |
| Se | 0.0040 | 0.0040 | 0.0040 | 0.0047 | 0.0030 | 0.0031 | 0.0035 |
| $TiO_2$ | 0.044 | 0.044 | 0.044 | 0.044 | 0.044 | 0.044 | 0.044 |
| Redox Ratio | 24.3 | 24.0 | 22.5 | 23.9 | 20.4 | 22.0 | 19.8 |
| FeO | 0.450 | 0.443 | 0.416 | 0.441 | 0.408 | 0.439 | 0.397 |
| $NaNo_3$ | 0.16 | 0.16 | 0.16 | 0.16 | 0.16 | 0.16 | 0.16 |
| Carbon | 002 | 002 | 0.02 | 0.02 | 0.02 | 002 | 002 |
| | | | | | | | |
| | Physical Properties 3.85 mm (%) | | | | | | |
| UV light transmittance ($T_{UV}$) | 2.6 | 3.8 | 3.3 | 2.2 | 4.6 | 4.9 | 4.5 |
| visible light transmission ($T_{LA}$) | 10.4 | 10.7 | 10.5 | 9.0 | 12.8 | 12.3 | 12.5 |
| direct solar transmittance ($T_{DS}$) | 8.6 | 9.0 | 9.5 | 8.1 | 11.0 | 10.1 | 11.0 |
| infrared radiation transmittance ($T_{IR}$) | 7.2 | 7.3 | 8.3 | 7.5 | 8.6 | 7.4 | 9.1 |
| total solar transmittance ($T_{TS}$) | 32.3 | 32.6 | 32.9 | 31.9 | 34.0 | 33.4 | 34.0 |
| | | | | | | | |
| | Color Transmission D65 10° Obs (ASTM E308) 3.85 mm | | | | | | |
| L* | 38.5 | 38.8 | 38.6 | 35.3 | 43.2 | 42.4 | 42.1 |
| a* | -2.6 | -1.1 | -1.2 | 0.0 | -4.3 | -3.9 | -2.1 |
| b* | 3.6 | 2.8 | 2.9 | 7.6 | -3.7 | -3.5 | 0.7 |
| dominant wavelength (nm) | 566.5 | 579.4 | 579.2 | 586.5 | 480.9 | 480.7 | 506.3 |
| %Purity | 7.0 | 5.5 | 5.7 | 15.4 | 9.3 | 8.7 | 1.1 |

Tables 4 and 5 (Examples 19 to 31) show the experimental results of the composition of the present disclosure with the combination of iron oxide ($Fe_2O_3$), cobalt oxide ($Co_3O_4$), selenium (Se), oxide copper and titanium oxide (TiO). Likewise, they contain 0.16% sodium nitrate ($NaNO_3$) and 0.02% carbon in the mixture.

TABLE 6

| Examples | 32 | 33 | 34 |
|---|---|---|---|
| | | | |
| Colorants in wt. % | | | |
| $Fe_2O_3$ | 2.00 | 2.00 | 2.00 |
| $Co_3O_4$ | 0.0320 | 0.0320 | 0.0320 |
| CuO | 0.0020 | 0.0020 | 0.0020 |
| Se | 0.0032 | 0.0027 | 0.0030 |
| $TiO_2$ | 0.220 | 0.220 | 0.220 |
| Redox Ratio | 24.6 | 25.7 | 22.9 |
| FeO | 0.493 | 0.513 | 0.458 |
| $NaNo_3$ | 0.16 | 0.16 | 0.16 |

(continued)

| Colorants in wt. % | | | |
|---|---|---|---|
| Carbon | 0.03 | 0.03 | 0.03 |
| | | | |
| Physical Properties 3.85 mm (%) | | | |
| UV light transmittance ($T_{UV}$) | 3.5 | 4.6 | 5.2 |
| visible light transmission ($T_{LA}$) | 10.7 | 12.1 | 12.5 |
| direct solar transmittance ($T_{DS}$) | 8.3 | 8.8 | 9.9 |
| infrared radiation transmittance ($T_{IR}$) | 5.6 | 5.1 | 6.6 |
| total solar transmittance ($T_{TS}$) | 32.1 | 32.4 | 33.2 |
| | | | |
| Color Transmission D65 Obs. 10°(ASTM E308) 3.85 mm | | | |
| L* | 40.0 | 42.7 | 42.8 |
| a* | -5.5 | -6.9 | -4.6 |
| b* | -3.1 | -6.7 | -4.1 |
| dominant wavelength (nm) | 482.8 | 480.1 | 480.7 |
| %Purity | 9.8 | 16.1 | 10.2 |

Table 6 (Examples 32 to 34) illustrates the experimental results of the composition of the present disclosure with the combination of iron oxide ($Fe_2O_3$), cobalt oxide or colbalt tetraoxide (CoO or $Co_3O_4$), selenium (Se), copper oxide, and titanium oxide ($TiO_2$). In addition, they contain 0.16% sodium nitrate ($NaNO_3$) and 0.030% carbon. The main objective of adding sodium nitrate ($NaNO_3$) and carbon to the composition is to modify the oxidation state of the iron to reach the optimal level of direct solar transmittance ($T_{DS}$). In addition, sodium nitrate helps to optimize selenium retention in the glass. Color and privacy are adjusted by optimizing the percentages of dyes described in this disclosure.

Further examples of the disclosure include the following shown in Table 7.

TABLE 7

| Additional experimental examples are illustrated below in Table 8. | | | | |
|---|---|---|---|---|
| Examples | 35 | 36 | 37 | 38 |
| | | | | |
| Composition in wt. % | | | | |
| $SiO_2$ | 72.24 | 72.24 | 72.26 | 72.28 |
| $Na_2O$ | 13.58 | 13.58 | 13.56 | 13.56 |
| $Fe_2O_3$ | 2.05 | 2.04 | 2.04 | 1.99 |
| CoO | 0.0326 | 0.0321 | 0.0325 | 0.0311 |
| $Al_2O_3$ | 0.39 | 0.38 | 0.39 | 0.39 |
| Se | 0.00329 | 0.0033 | 0.00341 | 0.00335 |
| MgO | 4.15 | 4.14 | 4.14 | 4.13 |
| CaO | 7.17 | 7.19 | 7.20 | 7.24 |
| $Na_2O$ | 13.58 | 13.58 | 13.56 | 13.56 |
| $K_2O$ | 0.137 | 0.136 | 0.136 | 0.135 |
| SrO | 0.003 | 0.003 | 0.003 | 0.003 |
| $ZrO_2$ | 0.006 | 0.006 | 0.006 | 0.006 |

(continued)

| Composition in wt. % | | | | |
|---|---|---|---|---|
| Cl | 0.008 | 0007 | 0.007 | 0.008 |
| $Cr_2O_3$ | 0.00087 | 0.00094 | 0.00092 | 000096 |

TABLE 8

| Examples | 39 | 40 | 41 | 42 | 43 | 44 | 45 | 46 | 47 |
|---|---|---|---|---|---|---|---|---|---|
| | | | | | | | | | |
| Colorants percent by weight | | | | | | | | | |
| $Fe_2O_3$ | 2.12 | 207 | 2.05 | 2.04 | 2.04 | 1.99 | 1.94 | 1.89 | 1.84 |
| $Co_3O_4$ | 0.0404 | 0.034 9 | 0.0349 | 0.0343 | 0.0348 | 0.0333 | 0.0338 | 0.0321 | 0.0283 |
| CuO | 0.0061 | 0.006 1 | 0.0060 | 0.0063 | 0.0064 | 0.0066 | 0.0060 | 0.0048 | 0.0035 |
| Se | 0.0047 | 0.003 3 | 0.0033 | 0.0033 | 0.0034 | 0.0034 | 0.0034 | 0.0031 | 0.0029 |
| $TiO_2$ | 0.060 | 0.031 | 0.031 | 0.031 | 0.031 | 0.031 | 0.031 | 0.030 | 0.031 |
| Redox Ratio | 28.3 | 20.8 | 22.1 | 22.3 | 22.1 | 22.0 | 22.1 | 21.9 | 21.9 |
| FeO | 0.600 | 0.430 | 0.454 | 0.455 | 0.451 | 0.438 | 0.429 | 0.415 | 0.402 |
| % Sodium Nitrate ($NaNO_3$) in Batch | 0.59 | 0.53 | 0.53 | 0.53 | 0.53 | 0.53 | 0.53 | 0.53 | 0.53 |
| % Carbon (Pet Coke) in Batch | 0.02 | 0.00 | 0.00 | 0.00 | 0.00 | 0.00 | 0.00 | 0.00 | 0.00 |
| | | | | | | | | | |
| Solar Properties 3.85 mm (%) | | | | | | | | | |
| UV light transmittance ($T_{UV}$) | 0.9 | 3.6 | 3.2 | 3.1 | 3.1 | 3.3 | 3.4 | 3.7 | 4.1 |
| visible light transmission ($T_{LA}$) | 4.7 | 10.8 | 9.8 | 9.5 | 100 | 10.4 | 10.4 | 11.5 | 13.1 |
| direct solar transmittance ($T_{DS}$) | 4.7 | 10.7 | 9.9 | 9.6 | 100 | 10.4 | 10.5 | 11.3 | 12.2 |
| infrared radiation transmittance ($T_{IR}$) | 4.8 | 9.8 | 9.2 | 9.0 | 9.3 | 9.6 | 9.8 | 10.3 | 10.8 |
| total solar transmittance ($T_{TS}$) | 29.5 | 33.9 | 33.3 | 33.1 | 33.4 | 33.7 | 33.7 | 34.3 | 35.0 |
| | | | | | | | | | |
| Color Transmitted Illuminant D65 10° Obs (ASTM E308) 3.85 mm | | | | | | | | | |
| L* | 25.6 | 39.8 | 37.6 | 37.1 | 37.8 | 39.0 | 38.6 | 41.2 | 44.2 |
| a* | -2.4 | -2.6 | -2.6 | -2.7 | -2.7 | -2.6 | -2.5 | -2.6 | -2.6 |
| b* | 3.4 | 1.6 | 1.3 | 1.3 | 1.8 | 1.7 | 1.7 | 1.3 | 1.6 |

(continued)

| Color Transmitted Illuminant D65 10° Obs (ASTM E308) 3.85 mm | | | | | | | | | | | |
|---|---|---|---|---|---|---|---|---|---|---|---|
| Dominant Wavelength (nm) | 557.8 | 537.1 | 522.2 | 523.2 | 542.2 | 540.9 | 527.3 | 516.4 | 539.5 | | |
| Purity % | 7.9 | 2.3 | 1.8 | 1.8 | 3.0 | 2.6 | 1.7 | 1.5 | 2.3 | | |

Redox ratios for the above-mentioned examples ranged from 0.2 to 0.3, averaging at 0.25. The physical properties of the glasses obtained were evaluated according to internationally accepted standards. Specifications for color determination such as dominant wavelength and excitation purity have been derived from Tristimulus colorimeter values (x, y, and z) which have been adopted by the International Commission on Illumination (C.I.E.), as a standard direct result of experiments involving many observers. These specifications can be determined by calculating the trichromatic coefficients x, y, and z of the Tristimulus colorimeter values that correspond to the colors red, green and blue respectively. The trichromatic values are plotted on the chromaticity diagram and compared with the coordinates of the illuminant D65, considered as a lighting standard. The comparison provides the information to determine the color excitation purity and its dominant wavelength. The dominant wavelength defines the wavelength of the color and its value is in the visible range, from 380 to 780 nm, while for excitation purity, the lower its value, the closer it tends to be neutral color.

The calculation of the UV light transmittance (Tuv) is adjusted to the range of solar UV radiation, therefore it was evaluated in the range of 300 to 400 nm in intervals of 10 nm, according to what is indicated in the ISO standard DIS 13837.

For the evaluation of light transmission, illuminant "A" ($T_{LA}$) was used, in the wavelength range of 400 to 800 nanometers, integrating values in 10nm intervals. Color transmission (L*, a* and b*) was calculated according to ASTM E308 (C.I.E. D65 observer at 10°).

The values of the direct solar transmittance ($T_{DS}$) were evaluated in the range of 300 to 2500 nm with intervals of 5, 10 and 50 nm, according to the ISO/DIS 13837 standard.

In the infrared transmission ($T_{IR}$) the range included in the radiation of the solar spectrum is contemplated, having a range of 800 to 2500 nm, with intervals of 50 nm, using the values of the ISO/DIS 13837 standard.

The total solar energy transmission ($T_{TS}$) was evaluated in the range from 300 to 2500 nm considering a wind speed of 4 m/s (stationary), according to the ISO/DIS 13837 standard.

The neutral gray glass of this disclosure can be manufactured by the float glass process from a thickness of 1.4 mm to 6 mm. However, the disclosure is not limited only to this range of thicknesses, and can be processed as tempered, in window glazing systems, double laminate process, or as a substrate covered by one or more layers.

This glass has the following properties: transmission of light with illuminant A ($T_{LA}$) not greater than 15%, direct solar transmittance ($T_{DS}$) not greater than 14%, transmission of near infrared radiation ($T_{IR}$) not greater than 14 %, UV light transmittance (Tuv) not greater than 8%, total solar energy transmission ($T_{TS}$) not greater than 38% and purity not greater than 50%.

It will be readily appreciated by those skilled in the art that modifications may be made to the disclosure without departing from the concepts disclosed in the foregoing description. Accordingly, the particular examples described in detail herein are illustrative only and are not limiting to the scope of the disclosure, which is to be given the full breadth of the appended claims and any and all equivalents thereof.

**Claims**

1. A low light transmission gray glass formed comprising colorants:

    2.04 wt.% to 2.12 wt.% $Fe_2O_3$;
    0.28 wt.% to 1.2 wt.% FeO;
    0.030 wt. % to 0.040 wt. % $Co_3O_4$;
    0.0020 wt. % to 0.010 wt. % Se;
    0.00050 wt. % to 0.050 wt. % CuO; and
    0.01 wt.% to 1 wt.% $TiO_2$.

2. The glass of claim 1 comprising a visible light transmission ($T_{LA}$) of less than 15%.

3. The glass of claim 1 comprising a direct solar transmittance ($T_{DS}$) of less than 14%.

4. The glass of claim 1 comprising an infrared radiation transmittance ($T_{IR}$) of less than 14%.

5. The glass of claim 1 comprising a UV light transmittance (Tuv) of less than 8%, and a total solar transmittance ($T_{TS}$) of less than 38%.

6. The glass of claim 1 having an excitation purity of no more than 50% at a thickness of 3.85 mm in a wavelength of 480-590 nm.

7. The glass of claim 1, wherein the colorant further comprises 0 wt.% to 0.07 wt.% carbon.

8. The glass of claim 1, wherein the amount of $Fe_2O_3$ is 2.0 wt.% to 2.2 wt.%.

9. The glass of claim 1, wherein the amount of $Fe_2O_3$ is 2.04 wt.% to 2.12 wt.%.

10. The glass of claim 1 comprising the following color CIELAB values as measured using an integrating sphere with D65 Illumination, 10° observer with specular component included:

    a L* value ranging from 46 to 15;
    an a* value ranging from -10 to 5; and
    a b* value ranging from -5.0 to 15.

11. A method for making a low light transmission gray glass using a conventional float non-vacuum glass system, the method comprising:

    melting a glass batch to provide a pool of molten glass;
    flowing the pool of molten glass onto the molten tin bath;
    moving the molten glass on the surface of the molten tin bath, while controllably cooling the molten glass and applying forces to the molten glass to provide a glass of a desired thickness; and
    removing the glass from the molten tin bath;
    wherein the glass colorants comprising:

    1.8 wt.% to 2.3 wt.% $Fe_2O_3$;
    0.28 wt.% to 1.2 wt.% FeO;
    0.030 wt.% to 0.040 wt.% $Co_3O_4$;
    0.0020 wt.% to 0.010 wt.% Se;
    0.00050 wt.% to 0.050 wt.% CuO; and
    0.01 wt.% to 1 wt.% $TiO_2$.

12. The glass of claim 1 or the method of claim 11, wherein the glass comprises a redox ratio of 15 to 40 %.

13. The glass of claim 1 or the method of claim 11, wherein the glass further comprises:

    68 wt.% to 75 wt.5 $SiO_2$;
    0 wt.% to 5 wt.% $Al_2O_3$;
    5 wt.% to 15 wt.% CaO;
    0 wt.% to 10 wt.% MgO;
    0 wt.% to 18 wt.% $Na_2O$;
    0 wt.% to 5 wt.% $K_2O$; and
    0.05 wt.% to 0.3 wt.% $SO_3$.

14. The glass of claim 1 or the method of claim 11, wherein the glass further comprises 0.01 wt.% to 1.0 wt.% $NaNO_3$.

15. The method of claim 11, wherein the dominant wavelength of the glass is from 480 nm to 590 nm.

Europäisches
Patentamt
European
Patent Office
Office européen
des brevets

# EUROPEAN SEARCH REPORT

**Application Number**

EP 24 18 6859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2024/211461 A1 (VITRO FLAT GLASS LLC [US]) 10 October 2024 (2024-10-10) * examples 2, 4; table 1 * ----- | 1-12,15 | INV. C03C4/02 C03C3/078 |
| X | WO 2020/046096 A1 (VIDRIO PLANO MEXICO SA DE CV [MX]) 5 March 2020 (2020-03-05) * examples 6-8; tables 1, 2 * ----- | 11-15 | |
| X | WO 2022/265484 A1 (VIDRIO PLANO MEXICO SA DE CV [MX]) 22 December 2022 (2022-12-22) * examples 6-8; tables 1,2 * -& US 2024/317634 A1 (CID AGUILAR JOSÉ GUADALUPE [MX]) 26 September 2024 (2024-09-26) ----- | 11-15 | |

**TECHNICAL FIELDS SEARCHED (IPC)**

C03C

The present search report has been drawn up for all claims

| Place of search | Date of completion of the search | Examiner |
|---|---|---|
| Munich | 10 December 2024 | Lecerf, Nicolas |

EPO FORM 1503 03.82 (P04C01)

2

## ANNEX TO THE EUROPEAN SEARCH REPORT
## ON EUROPEAN PATENT APPLICATION NO.

EP 24 18 6859

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2024

| Patent document cited in search report | Publication date | Patent family member(s) | | Publication date |
|---|---|---|---|---|
| WO 2024211461 A1 | 10-10-2024 | NONE | | |
| WO 2020046096 A1 | 05-03-2020 | NONE | | |
| WO 2022265484 A1 | 22-12-2022 | BR 112023026662 | A2 | 05-03-2024 |
| | | CA 3223298 | A1 | 22-12-2022 |
| | | CN 117715877 | A | 15-03-2024 |
| | | EP 4357308 | A1 | 24-04-2024 |
| | | JP 2024521976 | A | 04-06-2024 |
| | | KR 20240023120 | A | 20-02-2024 |
| | | US 2024317634 | A1 | 26-09-2024 |
| | | WO 2022265484 | A1 | 22-12-2022 |
| US 2024317634 A1 | 26-09-2024 | BR 112023026662 | A2 | 05-03-2024 |
| | | CA 3223298 | A1 | 22-12-2022 |
| | | CN 117715877 | A | 15-03-2024 |
| | | EP 4357308 | A1 | 24-04-2024 |
| | | JP 2024521976 | A | 04-06-2024 |
| | | KR 20240023120 | A | 20-02-2024 |
| | | US 2024317634 | A1 | 26-09-2024 |
| | | WO 2022265484 | A1 | 22-12-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5352640 A
- US RE37998 E, Combes
- US 5545596 A, Alvarez Casariego,
- US 7393802 B2, Seto
- US 7622410 B, Longobardo
- US 8017538 B2, Teyssedre,
- US 8551899 B, Kim
- US 7754632 B, Delmotte
- US 8785338 B, Tsuzuki
- US 9120695 B, Lee
- US 9617182 B, Cho,
- US 7902097 B2, Cid-Aguilar

### Non-patent literature cited in the description

- **K. M. FYLES**. *Modern Automotive Glasses, Glass Technology*, February 1996, vol. 37, 2-6
- **GORDON F. BRESTERM et al.** The color of iron-containing glasses of varying composition. *Journal of the Society of Glass Technology*, April 1950, 332-406
- **N. E. DENSEM**. The equilibrium between ferrous and ferric oxides in glasses. *Journal of the Society of Glass Technology*, May 1937, 374-389
- **J.C. HOSTETTER** ; **H.S. ROBERTS**. Note on the dissociation of Ferric Oxide dissolved in glass and its relation to the color of iron-bearing glasses. *Journal of the American Ceramic Society*, September 1921, 927-938
- **C.R. BAMFORD**. Color Generation and Control in Glass, Glass Science and Technology. Elsevier Science Publishing Co, 1977
- **BEALS MD**. Effects of Titanium Dioxide on Glass. *The Glass Industry*, September 1963, 495-531
- **WALDEMAR A.WEIL**. *Colored Glasses, Society of Glass Technology*, 1976, 154-167
- Color Generation and Control in Glass. **C. R. BAMFORD**. Glass Science and Technology. Elsevier Scientific Publishing Company, 1977, 48-50